# EUROPEAN PATENT APPLICATION

(11) **EP 4 660 877 A1**
(43) Date of publication of application: **10.12.2025**
(21) Application number: 25180243.5
(22) Date of filing: 02.06.2025
(51) Int. Cl.: G06N 3/045, G06N 3/0475, G06N 20/00

(54) **DETERMINING RESPONSE DIVERSITY IN GENERATIVE ARTIFICIAL INTELLIGENCE (AI) MODELS BASED ON EVALUATING SETS OF ANOMALOUS METRICS**

(30) Priority: 05.06.2024 US 202418734957
(71) Applicant: Microsoft Technology Licensing, LLC, Redmond, WA 98052 (US)
(72) Inventor: TITON, Myriam, Redmond, 98052 (US); ALBURQUERQUE, Michael, Redmond, 98052 (US); LEMBERG, Rachel, Redmond, 98052 (US); LEIBOVITCH, Inbal, Redmond, 98052 (US); SAMAMA, Jeremy, Redmond, 98052 (US); GRUSHKA, Hagit, Redmond, 98052 (US)
(74) Representative: CMS Cameron McKenna Nabarro Olswang LLP

(57) **Abstract**

This disclosure describes utilizing a model evaluation system for evaluating the diversity of generative text responses in one or more generative artificial intelligence (AI) models. Specifically, the model evaluation system (e.g., an anomalous metric-based generative AI model evaluation system) provides a framework for developing a metric that accurately quantifies a generative AI model's sensitivity to different combinations of anomalous metric inputs efficiently. For example, the model evaluation system utilizes categorical semantics to analyze input variations and gauge the degree to which a generative AI model incorporates these inputs in generating text responses. Indeed, the model evaluation system can efficiently determine an accurate and comprehensive metric for measuring response diversity in generative AI models based on analyzing the effects of input anomalous metrics.

## Description

### BACKGROUND

In recent years, there have been significant advancements in both hardware and software, particularly in generative artificial intelligence (AI) models and their ability to generate natural language responses to complex problems. However, these generative AI models often produce generalized responses instead of task-specific ones, especially when the tasks require complex reasoning. Even with diverse input combinations that require sophisticated cognitive processing, some generative AI models commonly provide the same generic response. Existing systems lack a holistic metric capable of evaluating the performance of these generative AI models from a macroscopic and unsupervised perspective. This absence hinders the ability to effectively measure and enhance the response diversity and specificity of a generative AI model.

### BRIEF DESCRIPTION OF THE DRAWINGS

The following detailed description provides specific and detailed implementations accompanied by drawings. Additionally, each of the figures listed below corresponds to one or more implementations discussed in this disclosure.
FIG. 1 illustrates an example overview of implementing the model evaluation system to determine response diversity scores for generative AI models.
FIG. 2 illustrates an example computing environment where a model evaluation system is implemented in a cloud computing system.
FIG. 3 illustrates an example diagram of generating a network graph from a set of generative text responses.
FIG. 4 illustrates an example diagram of generating a model diversity score for a generative AI model based on the network graph.
FIG. 5 illustrates an example diagram of determining a model diversity indication based on a model diversity score.
FIG. 6 illustrates an example series of acts of a computer-implemented method for determining response diversity in one or more generative artificial intelligence (AI) models that receive one or more anomalous metrics as input in a cloud computing system.
FIG. 7 illustrates example components included within a computer system that implements the model evaluation system.

### SUMMARY

This disclosure describes utilizing a model evaluation system for evaluating the diversity of generative text responses in one or more generative artificial intelligence (AI) models. Specifically, the model evaluation system (e.g., an anomalous metric-based generative AI model evaluation system) provides a framework for developing a metric that accurately quantifies a generative AI model's sensitivity to different combinations of anomalous metric inputs efficiently. For example, the model evaluation system utilizes categorical semantics to analyze input variations and gauge the degree to which a generative AI model incorporates these inputs in generating text responses. Indeed, the model evaluation system can efficiently determine an accurate and comprehensive metric for measuring response diversity in generative AI models based on analyzing the effects of input anomalous metrics.

### DETAILED DESCRIPTION

This disclosure describes utilizing a model evaluation system for evaluating the diversity of generative text responses in one or more generative artificial intelligence (AI) models. Specifically, the model evaluation system (e.g., an anomalous metric-based generative AI model evaluation system) provides a framework for developing a metric that accurately quantifies a generative AI model's sensitivity to different combinations of anomalous metric inputs efficiently. For example, the model evaluation system utilizes categorical semantics to analyze input variations and gauge the degree to which a generative AI model incorporates these inputs in generating text responses. Indeed, the model evaluation system can efficiently determine an accurate and comprehensive metric for measuring response diversity in generative AI models based on analyzing the effects of input anomalous metrics.

Implementations of the present disclosure provide benefits and solve problems in the art with systems, computer-readable media, and computer-implemented methods that utilize a model evaluation system. To elaborate, the model evaluation system implements an improved measurement of model sensitivity to evaluate the diversity of generative text responses generated by the generative AI model, including indicating how closely the inputs shape the diversity of model outputs.

As a high-level context, many cloud computing systems provide several services and applications to users. Periodically, a service incident impacts systems, services, applications, users, and/or devices. In this disclosure, the term "service incident" (or "incident") refers to an unplanned or unforeseen interruption to a cloud service or application within a cloud computing system. Often, an incident is determined by monitoring anomalous metrics of a service or application and detecting one or more anomalous metrics. In this disclosure, the terms "anomalous metric" and "metric anomaly" refer to a metric that deviates from an anticipated or expected value, trajectory, or range.

When an incident occurs, a service incident interface may provide additional information regarding the incident. For example, the service incident interface provides an incident with a text summary of the incident, one or more root causes, and mitigation actions based on the anomalous metrics associated with the service incident. In many cases, a metric management system or an anomaly mitigation system provides the anomalous metrics related to the service incident to a generative AI model, which generates the incident report based on the anomalous metrics and often additional contextual information. The generated incident report is then provided with the service incident interface. However, in some cases, some of the content included in the incident report is vague or generic rather than tailored to the particular anomalous metrics provided to the generative AI model.

Implementations of the model evaluation system address these shortcomings by measuring the degree to which a generative AI model considers these inputs when formulating text responses. To illustrate, in some implementations, the model evaluation system identifies generative text responses from a generative AI model in response to providing the generative AI model with anomalous metrics. In addition, the model evaluation system generates a network graph with nodes corresponding to the generative text responses. Furthermore, the model evaluation system determines a group diversity score for a connected node group based on anomalous metrics within the connected node group. In addition, the model evaluation system determines a model diversity score for the generative AI model based on combining multiple group diversity scores and provides a corresponding model diversity indication for the generative AI model.

In this document, a "generative text diversity score" (or "diversity score" for short) is a metric used to evaluate the variety and uniqueness of responses generated by a generative AI model. For instance, a diversity score measures how different or diverse given sets of anomalous metric inputs are for each group of similarly generated responses. A higher diversity score indicates greater diversity in a generative AI model's responses, suggesting the model is capable of producing a wide range of creative and varied outputs. Conversely, a lower diversity score may indicate that the model's responses are repetitive or too similar to one another.

At a high level, a diversity score may represent a graph-wide or model-wide diversity score that indicates a generative AI model's sensitivity to evaluating the diversity of generative text responses generated by the generative AI model as a whole. In some implementations, a diversity score is more granular. For example, a "connected node group diversity score" (or "group diversity score") indicates response diversity (a mark of how similar or different responses in a group are compared to others in the group) among a group of related generative text responses based on anomalous metrics within the connected group. Additionally, an "anomalous metric diversity score" indicates highly granular response diversity based on diversity for a single anomalous metric within a connected group.

As described in this disclosure, including the following paragraphs, the model evaluation system (e.g., an anomalous metric-based generative AI model evaluation system) delivers several significant technical benefits in terms of computing accuracy, flexibility, and efficiency compared to existing systems. Moreover, the model evaluation system provides several practical applications that address problems related to measuring the sensitivity of generative AI models to anomalous metric inputs for models that create generative text responses (e.g., service incident reports) based on anomalous metric inputs.

To illustrate, the model evaluation system implements a multi-step framework for determining a generative response diversity score metric for a generative AI model (e.g., a model diversity score). Based on generating a model diversity score for the generative AI model, the model evaluation system measures whether different anomalous metrics lead to diverse possible root causes, as indicated in incident reports from the generative AI model. Furthermore, using the model diversity score, improvements can be made to anomalous metrics and/or the generative AI model, resulting in improved efficiency and accuracy.

Similarly, based on model diversity scores, the model evaluation system can measure and track whether the changes to the anomalous metrics and/or the generative AI model improve or degrade model diversity. For instance, generative AI models that provide low or weak response diversity waste computing (e.g., processing and memory) resources by providing vague responses. In contrast, using the model evaluation system to arrive at highly diverse scores results in the generative AI model efficiently providing more useful and accurate generative text responses.

In addition to the various terms defined above, this disclosure utilizes a variety of terms to describe the features and advantages of one or more implementations described. For instance, this disclosure describes a model evaluation system in the context of a cloud computing system. As an example, the term "cloud computing system" refers to a network of interconnected computing devices that provide various services and applications to computing devices (e.g., server devices and client devices) inside or outside of the cloud computing system.

As an example, the term "generative artificial intelligence model" (or "generative AI model") refers to an artificial intelligence computational system that utilizes deep learning and a large number of parameters (e.g., in the billions or trillions for a large version and fewer for a small version) that are trained on one or more extensive datasets to produce coherent, contextually relevant, and fluent topic-specific outputs (e.g., text and/or images). In many instances, a generative AI model refers to an advanced computational system that uses natural language processing, machine learning, and/or image processing to generate coherent and contextually relevant human-like responses. For example, a generative AI image model is a generative AI model that specializes in creating generative images

Generative AI models have applications in natural language understanding, content generation, text summarization, dialogue systems, language translation, creative writing assistance, image generation, audio generation, and more. A single generative AI model often performs a wide range of tasks by receiving different inputs, such as prompts (e.g., input instructions, rules, example inputs, example outputs, and/or tasks), data, and/or access to data. In response, the generative AI model generates various output formats ranging from one-word answers to long narratives, images and videos, labeled datasets, documents, tables, and presentations.

Moreover, generative AI models are primarily based on transformer architectures for understanding, generating, and manipulating human language. Generative AI models can also utilize other types of architectures, such as recurrent neural network (RNN) architecture, long short-term memory (LSTM) model architecture, convolutional neural network (CNN) architecture, or other types of architectures. Examples of generative AI models include generative pre-trained transformer (GPT) models like GPT-3.5, GPT-4, and GPT-4o, bidirectional encoder representations from transformers (BERT) models, text-to-text transfer transformer models like T5, conditional transformer language (CTRL) models, and Turing-NLG. Other types of generative AI models include sequence-to-sequence models (Seq2Seq), vanilla RNNs, and LSTM networks. In some instances, a generative AI model includes a large language model (LLM), a small language model (SLM), and a small action model (SAM), which serves as a text-based version of a generative AI model, such as one that receives text prompts and/or generates text outputs. In various implementations, a generative AI model is a multimodal generative model that receives multiple input formats (e.g., text, images, video, data structures) and/or generates multiple output formats.

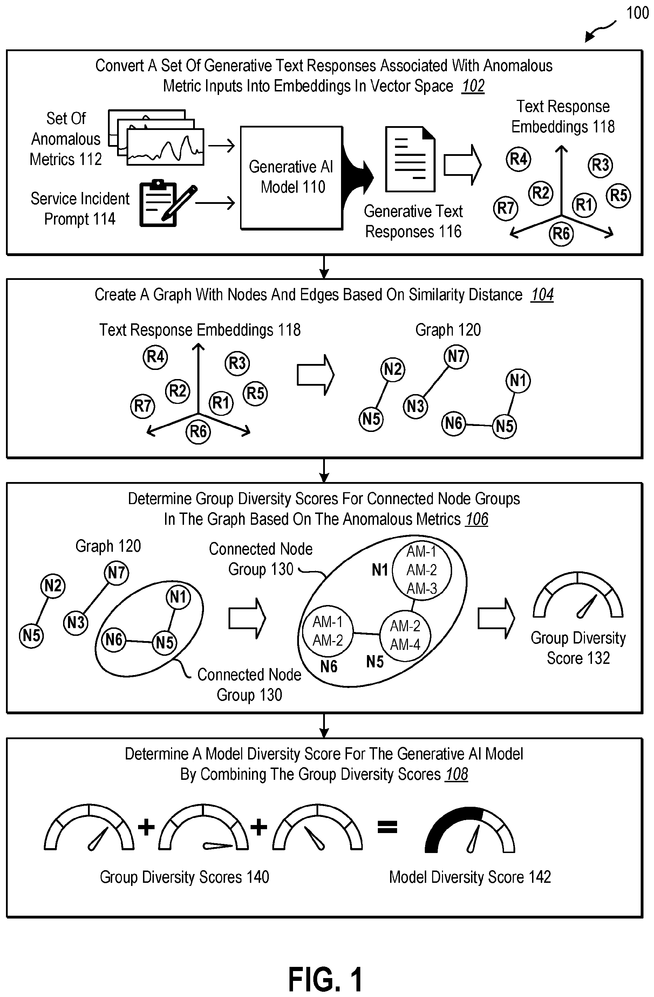

Additional example implementations and details of the model evaluation system are discussed in connection with the accompanying figures, which are described next. For example, FIG. 1 illustrates an example overview of implementing the model evaluation system to determine response diversity scores for generative AI models according to some implementations. FIG. 1 includes a series of acts 100 performed by the model evaluation system (e.g., an anomalous metric-based generative AI model evaluation system) within a cloud computing system.

As shown, the series of acts 100 includes act 102 of converting a set of generative text responses associated with anomalous metric inputs into embeddings in vector space. As mentioned earlier, a generative AI model 110 may create generative text responses 116 associated with incident reports. In particular, when a service incident is detected in a cloud computing system based on a set of anomalous metrics 112 appearing or triggering, a service incident prompt 114 and the set of anomalous metrics 112 may be provided to the generative AI model 110, which returns a service incident report in the form of a generative text response. As additional service incidents occur, the generative AI model 110 continues to generate generative text responses 116. Using these generative text responses 116, the model evaluation system can measure the response diversity of the generative AI model 110.

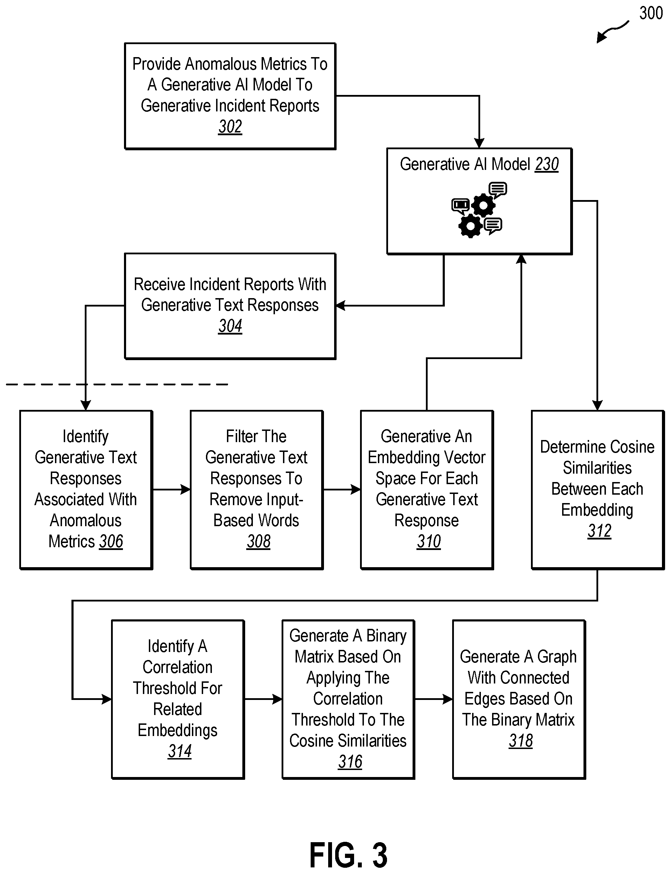

Upon identifying the generative text responses 116, in some instances, the model evaluation system pre-processes the responses to filter out words and terms that do not focus on service incidents or anomalous metrics. Additionally, the model evaluation system can generate text response embeddings 118 from the generative text responses 116 to map the responses to a multi-dimensional vector space. Additional details of identifying, filtering, and embedding generative text responses are provided below in connection with FIG. 3.

Act 104 includes creating a graph with nodes and edges based on similarity distance. In various implementations, the model evaluation system converts the text response embeddings 118 into a graph 120 (e.g., a network graph). For example, the model evaluation system determines similarities between each pair of text response embeddings (e.g., cosine similarities or Euclidean distances). For embedding pairs that have at least a threshold similarity value, the model evaluation system creates a connection or edge between the two nodes on the network graph. Additional details of generating a network graph from text response embeddings are provided below in connection with FIG. 3.

Act 106 includes determining group diversity scores for connected node groups in the graph based on the anomalous metrics. For instance, a connected node group includes nodes in the graph 120 that are directly or indirectly connected. For each connected node group, the model evaluation system determines a group diversity score.

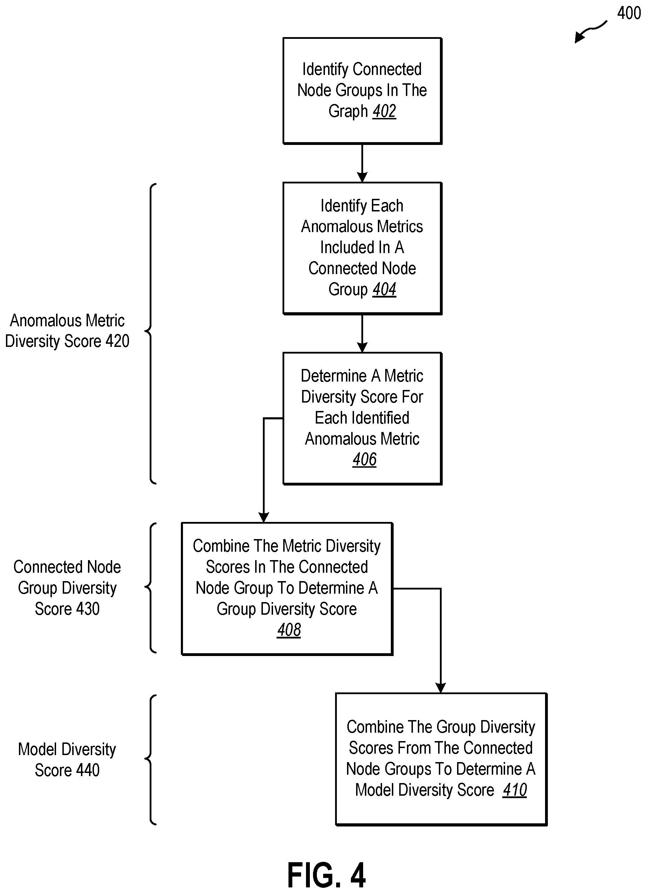

At a high level, the model evaluation system determines the group diversity score 132 for a connected node group 130 based on the anomalous metrics within the group. In some implementations, the model evaluation system determines a group diversity score based on combining anomalous metric diversity scores within a connected node group. Additional details on determining anomalous metric diversity scores and group diversity scores are provided below in connection with FIG. 4.

Act 108 includes determining a model diversity score for the generative AI model by combining the group diversity scores. In various implementations, once the group diversity scores 140 for some or all of the connected node groups in the graph 120 are determined, the model evaluation system combines the group diversity scores 140 to generate a model diversity score 142. Additional details on determining model diversity scores are provided below in connection with FIG. 4.

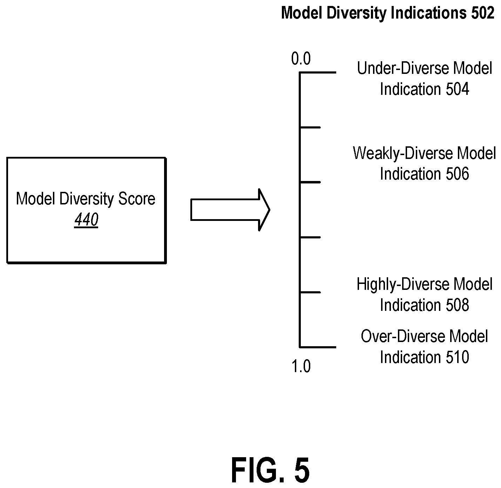

Additionally, once the model diversity score for the generative AI model 110 is determined, in various implementations, the model evaluation system determines an applicable diversity indication that explains the effects of the model diversity score. For example, one model diversity indication signals an under-diverse model while another indication signals a highly-diverse or over-diverse model. Additional examples of diversity indications for a generative AI model are provided below in connection with FIG. 5.

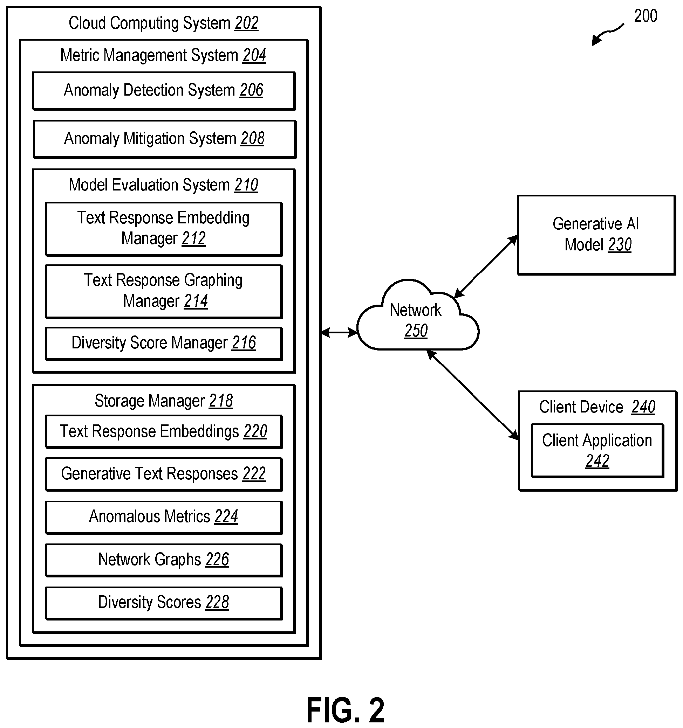

With a general overview in place, additional details are provided regarding the components, features, and elements of the model evaluation system. To illustrate, FIG. 2 shows an example computing environment where the model evaluation system is implemented. In particular, FIG. 2 illustrates an example of a computing environment 200 of various computing devices associated with a model evaluation system 210. While FIG. 2 shows example arrangements and configurations of a model evaluation system and associated components, other arrangements and configurations are possible.

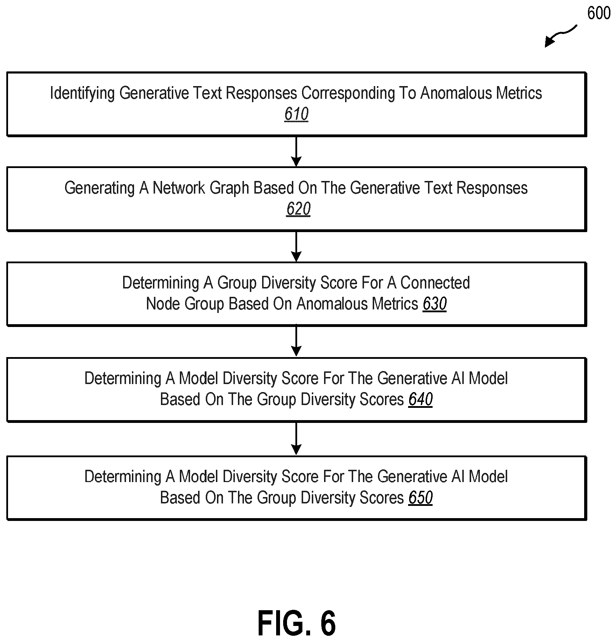

As shown, the computing environment 200 includes a cloud computing system 202 that implements the model evaluation system 210, a generative AI model 230, and a client device 240 connected via a network 250. Many of these components may be implemented on one or more computing devices, such as on one or more server devices. Some of these components may be implemented on a personal device. For example, the generative AI model 230 is a small generative model located on the client device 240. Further details regarding computing devices are provided below in connection with FIG. 6, along with additional details regarding networks, such as the network 250 shown.

Before describing components of the cloud computing system 202, including the model evaluation system 210, other components of the computing environment 200 are first discussed. As shown, the computing environment 200 includes the generative AI model 230, which creates generative text responses based on anomalous metrics. For example, the generative AI model 230 receives a set of anomalous metrics associated with a service incident within the cloud computing system 202 and, in response, generates a service incident report in the form of a generative text response.

As shown, the computing environment 200 includes the client device 240. In various implementations, the client device 240 is associated with a user (e.g., a user client device), such as a user who accesses a service incident interactive interface to view service incident reports created by the generative AI model 110. In some implementations, the model evaluation system 210 provides the client device 240 with model diversity indications regarding the response diversity sensitivity of the generative AI model 110 for a given solution or model version. As illustrated, the client device 240 includes a client application 242, such as a web browser, mobile application, or another form of computer application for accessing and/or interacting with the cloud computing system 202 and/or the model evaluation system 210.

Returning to the cloud computing system 202, as shown, the cloud computing system 202 includes a metric management system 204. The metric management system 204 may implement a variety of systems associated with detecting, tracking, managing, and mitigating service incidents within the cloud computing system 202. For example, the anomaly detection system 206 includes an anomaly detection system 206, an anomaly mitigation system 208, and the model evaluation system 210.

The anomaly detection system 206 can detect when service incidents occur within the cloud computing system 202. For instance, the anomaly detection system 206 communicates with metric reporting services to receive metrics regarding operational processes, services, and applications as well as determine when a metric becomes anomalous. The metric reporting services can include services both internal and external to the cloud computing system 202.

The anomaly mitigation system 208 can provide mitigation information regarding service incidents. For example, when a service incident is detected, the anomaly mitigation system 208 provides anomalous metrics 224 corresponding to the service incident to the generative AI model 230. The generative AI model 230 then creates and returns generative text responses 222 that summarize the service incident, identify the root causes, and provide mitigation steps, such as an incident report.

As shown, the metric management system 204 implements the model evaluation system 210. In some implementations, the model evaluation system 210 is located on a separate computing device within the cloud computing system 202, separate from the metric management system 204, the anomaly detection system 206, and/or the anomaly mitigation system 208. In some instances, the model evaluation system 210 is located separately from the cloud computing system 202.

As mentioned earlier, the anomaly detection system 206 provides a framework for efficiently deriving a metric that accurately quantifies a generative AI model's sensitivity to varying combinations of anomalous metric inputs. As shown, the model evaluation system 210 includes various components and elements implemented in hardware and/or software. For example, the model evaluation system 210 includes a text response embedding manager 212, a text response graphing manager 214, a diversity score manager 216, and a storage manager 218. The storage manager 218 includes text response embeddings 220, generative text responses 222, anomalous metrics 224, network graphs 226, and diversity scores 228.

The text response embedding manager 212 can generate text response embeddings 220 based on generative text responses 222 created by the generative AI model 230. For example, the text response embedding manager 212 utilizes the generative AI model 230 to generate an embedding for each of the generative text responses 222 and maps the text response embeddings 220 into vector space. In some instances, the text response embedding manager 212 also performs various stages of cleaning and filtering of the generative text responses 222 before converting them into text response embeddings.

The text response graphing manager 214 can generate and manage network graphs 226. For example, the text response graphing manager 214 generates a network graph from the text response embeddings. In some instances, the text response graphing manager 214 associates anomalous metrics 224 with corresponding nodes in a network graph. In one or more implementations, the text response graphing manager 214 also identifies connected node groups.

The diversity score manager 216 can determine diversity scores 228 for anomalous metrics 224, connected node groups, and network graphs 226. For example, the diversity score manager 216 determines a graph or model diversity score that measures the degree to which the generative AI model 230 considers inputs (e.g., the generative text responses 222) when formulating the generative text responses 222.

FIG. 3 to FIG. 5 provide additional details regarding the model evaluation system 210 generating diversity scores from generative text responses. As mentioned above, FIG. 3 provides additional details regarding identifying, filtering, and embedding generative text responses as well as generating a network graph from text response embeddings. In particular, FIG. 3 illustrates an example diagram of generating a network graph from a set of generative text responses according to some implementations.

As shown, FIG. 3 includes a series of acts 300 corresponding to creating a network graph from a set of generative text responses. The model evaluation system 210 may perform some or all of the acts included in the series of acts 300. Some of the acts include utilizing the generative AI model 230, described above.

As shown, the series of acts 300 includes act 302 of providing anomalous metrics to a generative AI model 230 to generate incident reports. As described above, in response to one or more anomalous metrics being triggered, a metric management system, an anomaly mitigation system, or another system provides the set of anomalous metrics to the generative AI model 230 along with a service incident prompt instructing the model to generate a service incident report by analyzing the anomalous metrics to determine the root cause of the incident and mitigation actions. Further, the service incident prompt instructs the generative AI model 230 to provide these findings along with a natural-language text summary in an incident report, returned in the form of a generative text response.

Act 304 includes receiving incident reports with generative text responses. For example, the prompting system receives the incident reports from the generative AI model 230. Furthermore, the prompting system and/or the model evaluation system 210 may store the generative text responses along with the sets of anomalous metrics corresponding to each response.

Act 306 includes identifying generative text responses associated with anomalous metrics. For example, after a number of responses are stored or after a predetermined period of time passes (indicated by the dashed line in FIG. 3), the model evaluation system 210 obtains a set of generative text responses from a data store. In addition, the model evaluation system 210 may identify the set of one or more anomalous metrics associated with each generative text response. Furthermore, the model evaluation system 210 can obtain generative text responses for a period of time, such as 5 weeks, 6 months, or the lifespan of a model.

In some implementations, the model evaluation system 210 identifies generative text responses associated with a specific generative AI model or model version. In some implementations, the model evaluation system 210 identifies generative text responses associated with a specific incident report prompt version or anomalous metric configuration setting (e.g., different solution versions of the metric management system). By separating generative text responses based on model or solution versions, the model evaluation system 210 can measure response diversity improvement or degradation across versions.

Act 308 includes filtering the generative text response to remove input-based words. For example, in various implementations, the model evaluation system 210 removes or minimizes words or phrases that would falsely correlate unrelated generative text responses using one or more text filtering tools. By doing so, the model evaluation system 210 eliminates incorrect input-based correlations between generative text responses and better assesses how the generative AI model 230 performs in terms of response diversity to anomalous metric inputs.

The model evaluation system 210 can use one or more text filtering tools to perform various operations to filter out minor, trivial, generic, or inconsequential words from the generative text responses. For example, the model evaluation system 210 uses a text filtering tool to execute a heuristic operation that removes stop words (e.g., a, the, in, with, and, but, it, is, am, and/or other stop words). As another example, the text filtering tools include another heuristic operation that removes various words, phrases, and/or syntax from the service incident prompt, particularly phrases in the instructions that a generative AI model is likely to repeat in each generative text response (e.g., "service incident report" or "summary").

In some implementations, the text filtering tools include a heuristic operation that ranks phrases in each text summary according to their statistical importance. For example, the model evaluation system 210 evaluates the generative text responses as a whole and determines an importance score for each word or phrase, then ranks the words within each generative text response based on their importance score.

Act 310 includes generating embeddings in vector space for each generative text response. In various implementations, the model evaluation system 210 utilizes the generative AI model 230 to generate vector embeddings for each of the generative text responses. For example, the model evaluation system 210 provides an embeddings prompt to the generative AI model 230 that instructs the generative AI model 230 to generate a text response embedding for each of the generative text responses.

In various implementations, the model evaluation system 210 utilizes the symbolic abstraction model generative AI model 230 that generates the generative text responses. By doing so, the internal contexts, biases, and perceptions of the generative AI model used to generate the generative text responses are also applied in analyzing, decoding, and generating the text response embeddings. In some instances, however, the model evaluation system 210 utilizes a different generative AI model to generate the text response embeddings than the one used to create the generative text responses.

In some implementations, the model evaluation system 210 utilizes another type of machine learning model or neural network, or heuristic to generate the text response embeddings. For example, the model evaluation system 210 utilizes a word-to-vector machine learning model to create the text response embeddings from the generative text responses.

In various implementations, the text response embeddings are generated in a large vector space, which allows for richer correlations to be identified. For example, the text response embeddings are generated in a 1024-dimensional vector space. In one or more implementations, the text response embeddings are generated in a larger or smaller vector space.

Act 312 includes determining cosine similarities between each embedding. In various implementations, the model evaluation system 210 determines a correspondence between each of the text response embeddings. For example, the model evaluation system 210 creates embedding pairs for each of the text response embeddings.

In some implementations, the model evaluation system 210 determines a similarity or correlation score for each embedding pair. In various implementations, the model evaluation system 210 determines a cosine similarity between each embedding pair. For example, the model evaluation system 210 calculates the similarity score between 0.0 and 1.0 for each set or pair of text response embeddings. In some instances, the model evaluation system 210 uses another similarity function to determine correlation or similarity scores for the embedding pairs.

Additionally, in one or more implementations, the model evaluation system 210 stores the similarity scores for each embedding pair in a matrix, table, or other data structure. For example, a table or matrix includes one row per text response embedding and one column per text response embedding, and the intersection of rows and columns includes similarity scores between the two text response embeddings in the embedding pair.

Act 314 includes identifying a correlation threshold for related embeddings. For instance, in some instances, the model evaluation system 210 selects a static correspondence threshold value (e.g., 0.5, 0.8, 0.95). In some implementations, the model evaluation system 210 determines a dynamic correspondence threshold value. For example, the model evaluation system 210 identifies a correspondence threshold value that captures connections between a predetermined amount (e.g., number or percentage) of the generative text responses (e.g., the text response embeddings).

Act 316 includes generating a binary matrix based on applying the correlation threshold to the cosine similarities. In one or more implementations, the model evaluation system 210 uses the similarity scores to determine which of the embedding pairs have a sufficient correlation. For instance, upon identifying the correspondence threshold value (e.g., 0.5, 0.8, 0.95), the model evaluation system 210 determines which embedding pairs meet the correspondence threshold (e.g., equal to or above 0.95).

Next, in some instances, the model evaluation system 210 disregards embedding pairs that do not meet the correspondence threshold. For instance, the model evaluation system 210 may change those embedding pairs to a value of 0 (within the same table or a new table). In some implementations, for the embedding pairs that meet the correspondence threshold, the model evaluation system 210 changes those embedding pairs to a value of 1 (within the same table or a new table). For example, the model evaluation system 210 generates a new binary matrix that includes 0s and 1s, where the 1s represent embedding pairs that meet the correspondence threshold.

Act 318 includes generating a graph with connected edges based on the binary matrix. For example, the model evaluation system 210 generates a network graph that includes a node for each generative text response. In some instances, the model evaluation system 210 uses the locations of corresponding text response embeddings in vector space to determine how to map or space the nodes within the network graph.

Additionally, the model evaluation system 210 may add edge connections between various nodes. For example, using the binary matrix, the model evaluation system 210 adds an edge connection between text response nodes with embedding pairs that have a value of 1 in the binary matrix. Indeed, the model evaluation system 210 can use the binary matrix to generate a network graph that includes connected edges between text response nodes that meet the correspondence threshold.

In various implementations, the model evaluation system 210 associates anomalous metrics with nodes in the network graph. As mentioned previously, the model evaluation system 210 correlates sets of anomalous metrics with corresponding generative text responses. Using these correlations, the model evaluation system 210 supplements text response nodes in the graph with their corresponding anomalous metrics. By doing so, the model evaluation system 210 can analyze diversity sensitivity between generative text responses and corresponding anomalous metrics, as described in connection with the next figure.

In some implementations, the model evaluation system 210 ensures that the anomalous metrics added to nodes in the graph have unique names and/or identifiers. For example, metrics in different portions of the cloud computing system may have similar names; however, these two metrics may appear in connected nodes and create incorrect scores if treated as the same metric. Accordingly, the model evaluation system 210 may assign a unique identifier to each anomalous metric. In some instances, the model evaluation system 210 modifies the name of an anomalous metric to include one or more dimensions associated with the anomalous metric. For instance, by concatenating an anomalous metric name with its dimensions, the model evaluation system 210 ensures that the anomalous metric is unique, treated as different inputs, and separately analyzed.

As mentioned above, FIG. 4 provides additional details regarding determining anomalous metric diversity scores, group diversity scores, and model diversity scores. In particular, FIG. 4 illustrates an example of generating a model diversity score for a generative AI model based on the network graph according to some implementations.

FIG. 4 includes a series of acts 400 performed by the model evaluation system 210. The series of acts 400 includes the determination of three levels of diversity scores, including an anomalous metric diversity score 420 (within a connected node group), a connected node group diversity score 430, and a model diversity score 440 (aka a graph diversity score). Generally, multiple anomalous metric diversity scores are used to determine a connected node group diversity score, and multiple connected node group diversity scores are used to determine the model diversity score.

As shown in the series of acts 400, the model evaluation system 210 first performs act 402 of identifying a connected node group. As described above, a connected node group includes two or more nodes in a network graph that are directly or indirectly connected to other nodes in the same group. In some instances, a connected node group is referred to as a node cluster.

For each connected node group, the model evaluation system 210 determines a connected node group diversity score 430. As part of determining the connected node group diversity score 430, the model evaluation system 210 first determines anomalous metric diversity scores for each anomalous metric included in the connected node group. In various implementations, the anomalous metric diversity score 420 of a metric indicates the extent to which a metric contributes to response diversity within the connected node group. By combining the metric diversity scores, the model evaluation system 210 can determine a connected node group diversity score for the connected node group.

Act 404 and act 406 cover determining an anomalous metric diversity score in a connected node group and may be repeated for each anomalous metric in a connected node group. Act 404 includes identifying each anomalous metric included in a connected node group. In various implementations, the model evaluation system 210 parses each node in the connected node group to identify each unique anomalous metric included in the group. As mentioned above, each node in the graph represents a generative text response and includes one or more anomalous metrics provided to a generative AI model as input in creating the generative text response. Accordingly, by parsing the nodes in a connected node group, the model evaluation system 210 identifies a list of anomalous metrics included in the group.

Upon identifying each anomalous metric in a connected node group, the model evaluation system 210 determines an anomalous metric diversity score 420 for each identified anomalous metric, as shown by act 406. In various implementations, for each identified anomalous metric, the model evaluation system 210 counts the number of occurrences or times the metric appears in the connected node group. For example, the model evaluation system 210 traverses each node in the connected node group and increments a counter each time the anomalous metric is included in a node. Additionally, the model evaluation system 210 can count the total number of nodes in the connected node group.

The model evaluation system 210 can determine the anomalous metric diversity score 420 for a metric based on the number of appearances compared to the total number of nodes. For example, the model evaluation system 210 divides the number of appearances by the total number of nodes to determine an anomalous metric diversity score 420 for the metric between 0 and 1. A higher diversity score indicates that the anomalous metric is related to more generative text responses within the connected node group, while a lower score indicates that the metric contributed less to the generative text responses in the connected node group. Note that the same anomalous metric in different connected node groups is calculated separately.

In various implementations, the model evaluation system 210 determines an anomalous metric diversity score 420 for each metric in a connected node group. Accordingly, the model evaluation system 210 may include a list of anomalous metrics included in a connected node group, with each anomalous metric having an anomalous metric diversity score 420.

As shown, the series of acts 400 next includes determining a connected node group diversity score 430 in connection with act 408. Act 408 includes combining the metric diversity scores in the connected node group to determine a group diversity score. In various implementations, the model evaluation system 210 averages (e.g., determines the mean) the anomalous metric diversity scores within a connected node group to determine the diversity score for the connected node group.

In one or more implementations, the model evaluation system 210 may combine the anomalous metric diversity scores in other ways to determine the connected node group diversity score 430. For example, the model evaluation system 210 calculates the median or mode of the anomalous metric diversity scores to determine the connected node group diversity score 430. In some instances, the model evaluation system 210 first removes a number of top and bottom metric scores before combining or averaging the remaining anomalous metric diversity scores in a connected node group. In some implementations, the model evaluation system 210 determines how to combine the metric scores in a connected node group based on the number of unique or total anomalous metrics in the group (e.g., one approach for groups with over 10 nodes and a second approach for groups with fewer than 10 nodes).

Additionally, the model evaluation system 210 may repeat act 408 for each connected node group within the network graph. In some implementations, the model evaluation system 210 disregards nodes not in a connected node group when determining diversity scores.

As shown, the series of acts 400 next includes determining a model diversity score 440 in connection with act 410. Act 410 includes combining the groups diversity scores from the connected node group to determine a model diversity score. In one or more implementations, the model evaluation system 210 averages (e.g., determines the mean) the group diversity scores from each of the connected node groups in the graph to determine the model diversity score 440. Similar to the description above, the model evaluation system 210 may combine the diversity scores from the connected node groups in various ways to determine the model diversity score to the network graph.

Upon determining the model diversity score 440, the model evaluation system 210 may provide the score as a measure of model sensitivity to response diversity. For example, the model evaluation system 210 provides the model diversity score 440 to an interactive interface displayed on a client device.

In various implementations, the model evaluation system 210 associates the model diversity score with a particular model version and/or solutions version (e.g., anomalous metric trigger conditions and prompt engineering methods used with the model). As the generative AI model or the solutions change, the model evaluation system 210 determines a new model diversity score. By doing so, the model evaluation system 210 enables response diversity to be tracked across changes in the model or solutions. These measurements can provide valuable insight into whether response diversity improvements are being implemented and/or whether changes are having a degrading effect on diversity scores.

Along with providing a model diversity score, in various implementations, the model evaluation system 210 also provides insights or indications associated with the model diversity scores. To illustrate, FIG. 5 shows an example of determining a model diversity indication based on a model diversity score according to some implementations. As shown, FIG. 5 maps a model diversity score 440 to model diversity indications 502.

The diversity indications 502 include a range from 0.0 to 1.0. Other ranges may be used. As shown, the diversity indications 502 include indications of an under-diverse model indication 504, a weakly-diverse model indication 506, a highly-diverse model indication 508, and an over-diverse model indication 510. The under-diverse model indication 504 and the weakly-diverse model indication 506 correspond to low model diversity scores at or near the bottom of the score range. In various instances, model diversity scores that are closer to 0 indicate that a generative AI model is providing generative text responses that are too generic. For example, regardless of what anomalous metrics are provided as input, the generative AI model provides the same generative text response (e.g., restart a virtual cluster).

The highly-diverse model indication 508 corresponds to a sufficiently diverse generative AI model. For example, model diversity scores in the high 0.8 to the low 0.9 range may indicate a model that produces generative text responses with diverse answers (e.g., text summary of the incident, one or more root causes, and mitigation actions) when provided with different anomalous metrics. However, the over-diverse model indication 510, or a score at or very close to 1.0 may indicate that the generative AI model is providing generative text responses that are too specific (e.g., the responses repeat the specific combination of anomalous metric inputs without providing additional insights).

In one or more implementations, while the model diversity score provides an indication of whether a generative AI model is providing generative text responses that are too vague, too specific, or balanced, the model diversity score does not report on the accuracy or effectiveness of the model. However, by providing a model diversity score, the model evaluation system 210 accurately quantifies a generative AI model's sensitivity to varying combinations of anomalous metric inputs. Furthermore, the model evaluation system 210 allows changes to a model or solutions to be tracked across changes and indicates whether new versions or solutions improve or degrade model response diversity.

Turning now to FIG. 6, this figure illustrates an example series of acts of a computer-implemented method for determining response diversity in one or more generative artificial intelligence (AI) models that receive one or more anomalous metrics as input according to some implementations. While FIG. 6 illustrates acts according to one or more implementations, alternative implementations may omit, add to, reorder, and/or modify any of the acts shown.

The acts in FIG. 6 can be performed as part of a method (e.g., a computer-implemented method). Alternatively, a computer-readable medium can include instructions that, when executed by a processing system with a processor, cause a computing device to perform the acts in FIG. 6. In some implementations, a system (e.g., a processing system comprising a processor) can perform the acts in FIG. 6. For example, the system includes a processing system and a computer memory including instructions that, when executed by the processing system, cause the system to perform various actions or steps.

As shown, the series of acts 600 includes act 610 of identifying generative text responses corresponding to anomalous metrics. For instance, in example implementations, act 610 involves identifying a set of generative text responses from a generative AI model in response to providing the generative AI model with sets of anomalous metrics, wherein a first generative text response from the set of generative text responses corresponds to a first set of anomalous metrics from the sets of anomalous metrics provided to the generative AI model.

In some implementations, act 610 also includes providing incident report prompts to the generative AI model, where each prompt includes a set of anomalous metrics corresponding to a service incident within a cloud computing system, receiving a generative text response for each incident report from the generative AI model indicating a summary text response, a root cause text response, and a mitigation text response, and associating each generative text response received from the generative AI model with a corresponding set of anomalous metrics from which the generative text response was generated to generate the set of generative text responses.

In various implementations, act 610 includes filtering the first generative text response using one or more text filtering tools to remove input-based terms before generating the first node from the first generative text response. In some implementations, act 610 also includes generating a first embedding of the first generative text response from a filtered version of the first generative text response using the generative AI model, wherein the generative AI model generates both the first generative text response and the first embedding and generating additional embeddings from additional generative text responses from the set of generative text responses using the generative AI model.

In some implementations, act 610 also includes determining cosine similarity values between the first embedding and additional embeddings and generating a cosine similarity data structure that includes the cosine similarity values. In various implementations, each anomalous metric in the set of anomalous metrics is associated with a metric having a metric name and a set of dimensions, and anomalous metrics are uniquely identified by combining the metric name with the set of dimensions as a metric identifier.

As further shown, the series of acts 600 includes act 620 of generating a network graph based on the generative text responses. For instance, in example implementations, act 620 involves generating a graph with a set of nodes based on the set of generative text responses. In some implementations, the first node in the graph corresponds to the first generative text response and is associated with the first set of anomalous metrics.

In various implementations, act 620 includes generating the graph with the set of nodes by comparing each of the cosine similarity values for each embedding pair in the cosine similarity data structure to a correspondence threshold, generating a node in the graph for each generative text response in the set of generative text responses, and adding a connection in the graph between each node pair associated with an embedding pair that meets the correspondence threshold. In some instances, each node in the graph corresponds to an embedding within the cosine similarity data structure. In some implementations, the correspondence threshold is met when the embedding pair between two nodes in the cosine similarity data structure is at or above 0.95.

As further shown, the series of acts 600 includes act 630 of determining a group diversity score for a connected node group based on anomalous metrics. For instance, in example implementations, act 630 involves determining a first group diversity score for a first connected node group that includes the first node based on anomalous metrics associated with nodes within the first connected node group including the first set of anomalous metrics. In various implementations, act 630 includes generating the first connected node group by identifying the nodes in the graph that directly or indirectly connect to the first node via node connections and creating the first connected node group by forming or arranging the nodes into the first connected node group.

In some implementations, act 630 also includes generating the first group diversity score by identifying a first anomalous metric associated with the first node in the first connected node group, determining a first anomalous metric count based on the number of nodes in the first connected node group that includes the first anomalous metric, comparing the first anomalous metric count with the total number of nodes in the first connected node group to generate a first diversity score for the first anomalous metric, determining a first set of anomalous metric scores for each anomalous metric associated with the nodes in the first connected node group, and/or generating the first group diversity score by combining the first set of anomalous metric scores.

As further shown, the series of acts 600 includes act 640 of determining a model diversity score for the generative AI model based on the group diversity scores. For instance, in example implementations, act 640 involves determining a model diversity score for the generative AI model based on combining multiple group diversity scores, including the first group diversity score. In various implementations, act 640 includes generating the multiple group diversity scores by determining group diversity scores for each connected node group in the graph, and generating the model diversity score by averaging the multiple group diversity scores.

As further shown, the series of acts 600 includes act 650 of providing a model diversity indication for the generative AI model based on the model diversity score. For instance, in example implementations, act 650 involves providing a model diversity indication for the generative AI model that is based on the model diversity score. In various implementations, act 650 includes determining the model diversity indication for a set of model diversity indications based on the model diversity score. In some instances, the set of model diversity indications includes a weakly diverse model indication, a highly diverse model indication, and an over-diverse model indication. In some instances, the over-diverse model indication indicates that the generative AI model provides a unique generative text response for each distinct combination of anomalous metric inputs. In some instances, the weakly diverse model indication indicates that the generative AI model provides the same vague generative text response in response to different combinations of anomalous metric inputs.

In some instances, the series of acts 600 includes additional and/or different actions. For example, the series of acts 600 includes modifying the generative AI model from a first model version to a second model version, determining a model diversity score for the second model version, and determining that the second model version is more diverse than the first model version based on comparing the model diversity scores of the first model version and the second model version.

In various implementations, the series of acts 600 includes identifying a set of generative text responses from a generative AI model in response to providing the generative AI model with sets of anomalous metrics, generating a graph with a set of nodes based on the set of generative text responses (where each node is associated with a set of anomalous metrics that corresponds to a generative text response from which each node was generated), determining a group diversity score for each connected node group in the graph based on the sets of anomalous metrics associated with the nodes in each connected node group, determining a model diversity score based on combining the group diversity scores from each connected node group, and providing a model diversity indication of the generative AI model based on the model diversity score.

In one or more implementations, the series of acts 600 includes generating the group diversity score by identifying anomalous metrics associated with the nodes in each connected node group, determining anomalous metric counts based on the numbers of nodes in each connected node group, and comparing the anomalous metric counts with the total numbers of nodes in each connected node group to generate diversity scores for the anomalous metrics in each connected node group.

In some instances, the series of acts 600 includes generating the group diversity scores by determining sets of anomalous metric scores for the anomalous metrics associated with the nodes in the connected node groups and generating the group diversity scores by combining the sets of anomalous metric scores. In some cases, the series of acts 600 includes generating the model diversity score by determining the group diversity scores for each connected node group in the graph and generating the model diversity score by averaging the group diversity scores.

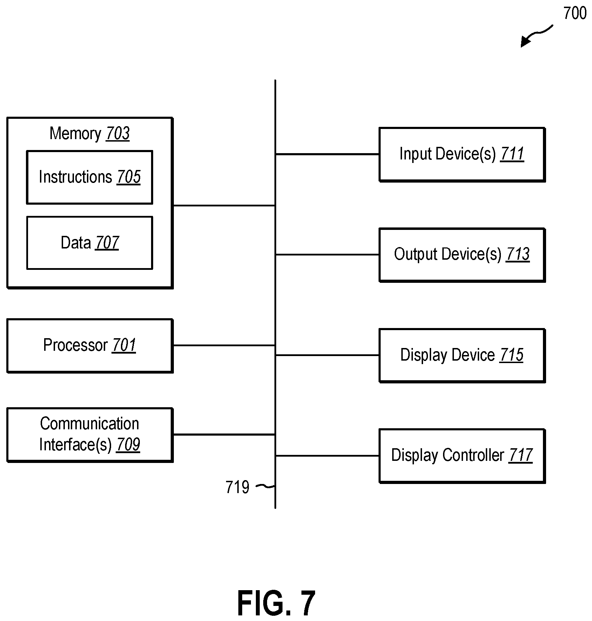

FIG. 7 illustrates certain components that may be included within a computer system 700. The computer system 700 may be used to implement the various computing devices, components, and systems described herein (e.g., by performing computer-implemented instructions). As used herein, a "computing device" refers to electronic components that perform a set of operations based on a set of programmed instructions. Computing devices include groups of electronic components, client devices, server devices, etc.

In various implementations, the computer system 700 represents one or more of the client devices, server devices, or other computing devices described above. For example, the computer system 700 may refer to various types of network devices capable of accessing data on a network, a cloud computing system, or another system. For instance, a client device may refer to a mobile device such as a mobile telephone, a smartphone, a personal digital assistant (PDA), a tablet, a laptop, or a wearable computing device (e.g., a headset or smartwatch). A client device may also refer to a non-mobile device such as a desktop computer, a server node (e.g., from another cloud computing system), or another non-portable device.

The computer system 700 includes a processing system including a processor 701. The processor 701 may be a general-purpose single- or multi-chip microprocessor (e.g., an Advanced Reduced Instruction Set Computer (RISC) Machine (ARM)), a special-purpose microprocessor (e.g., a digital signal processor (DSP)), a microcontroller, a programmable gate array, etc. The processor 701 may be referred to as a central processing unit (CPU) and may cause computer-implemented instructions to be performed. Although the processor 701 shown is just a single processor in the computer system 700 of FIG. 7, in an alternative configuration, a combination of processors (e.g., an ARM and DSP) could be used.

The computer system 700 also includes memory 703 in electronic communication with the processor 701. The memory 703 may be any electronic component capable of storing electronic information. For example, the memory 703 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

The instructions 705 and the data 707 may be stored in the memory 703. The instructions 705 may be executable by the processor 701 to implement some or all of the functionality disclosed herein. Executing the instructions 705 may involve the use of the data 707 that is stored in the memory 703. Any of the various examples of modules and components described herein may be implemented, partially or wholly, as instructions 705 stored in memory 703 and executed by the processor 701. Any of the various examples of data described herein may be among the data 707 that is stored in memory 703 and used during the execution of the instructions 705 by the processor 701.

A computer system 700 may also include one or more communication interface(s) 709 for communicating with other electronic devices. The one or more communication interface(s) 709 may be based on wired communication technology, wireless communication technology, or both. Some examples of the one or more communication interface(s) 709 include a Universal Serial Bus (USB), an Ethernet adapter, a wireless adapter that operates according to an Institute of Electrical and Electronics Engineers (IEEE) 702.11 wireless communication protocol, a Bluetooth^{®} wireless communication adapter, and an infrared (IR) communication port.

A computer system 700 may also include one or more input device(s) 711 and one or more output device(s) 713. Some examples of the one or more input device(s) 711 include a keyboard, mouse, microphone, remote control device, button, joystick, trackball, touchpad, and light pen. Some examples of the one or more output device(s) 713 include a speaker and a printer. A specific type of output device that is typically included in a computer system 700 is a display device 715. The display device 715 used with implementations disclosed herein may utilize any suitable image projection technology, such as liquid crystal display (LCD), light-emitting diode (LED), gas plasma, electroluminescence, or the like. A display controller 717 may also be provided, for converting data 707 stored in the memory 703 into text, graphics, and/or moving images (as appropriate) shown on the display device 715.

The various components of the computer system 700 may be coupled together by one or more buses, which may include a power bus, a control signal bus, a status signal bus, a data bus, etc. For clarity, the various buses are illustrated in FIG. 7 as a bus system 719.

This disclosure describes a subjective data application system in the framework of a network. In this disclosure, a "network" refers to one or more data links that enable electronic data transport between computer systems, modules, and other electronic devices. A network may include public networks such as the Internet as well as private networks. When information is transferred or provided over a network or another communication connection (either hardwired, wireless, or both), the computer correctly views the connection as a transmission medium. Transmission media can include a network and/or data links that carry the required program code in the form of computer-executable instructions or data structures, which can be accessed by a general-purpose or special-purpose computer.

In addition, the network described herein may represent a network or a combination of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which one or more computing devices may access the various systems described in this disclosure. Indeed, the networks described herein may include one or multiple networks that use one or more communication platforms or technologies for transmitting data. For example, a network may include the Internet or another data link that enables transporting electronic data between respective client devices and components (e.g., server devices and/or virtual machines thereon) of the cloud computing system.

Further, upon reaching various computer system components, program code means in the form of computer-executable instructions or data structures can be transferred automatically from transmission media to non-transitory computer-readable storage media (devices), or vice versa. For example, computer-executable instructions or data structures received over a network or data link can be buffered in random-access memory (RAM) within a network interface module (NIC) and then eventually transferred to computer system RAM and/or to less volatile computer storage media (devices) at a computer system. Thus, it should be understood that computer-readable storage media (devices) can be included in computer system components that also (or even primarily) utilize transmission media.

Computer-executable instructions include instructions and data that, when executed by a processor, cause a general-purpose computer, special-purpose computer, or special-purpose processing device to perform a certain function or group of functions. In some implementations, computer-executable and/or computer-implemented instructions are executed by a general-purpose computer to turn the general-purpose computer into a special-purpose computer implementing elements of the disclosure. The computer-executable instructions may include, for example, binaries, intermediate format instructions such as assembly language, or even source code. Although the subject matter has been described in language specific to structural features and/or methodological acts, it is to be understood that the subject matter defined in the appended claims is not necessarily limited to the features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or a combination of hardwired and wireless data links) through a network, both perform tasks. In a distributed system environment, program modules may be located in both local and remote memory storage devices.

The techniques described herein may be implemented in hardware, software, firmware, or any combination thereof unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium, including instructions that, when executed by at least one processor, perform one or more of the methods described herein (including computer-implemented methods). The instructions may be organized into routines, programs, objects, components, data structures, etc., which may perform particular tasks and/or implement particular data types, and which may be combined or distributed as desired in various implementations.

Computer-readable media can be any available medium that can be accessed by a general-purpose or special-purpose computer system. Computer-readable media that store computer-executable instructions are non-transitory computer-readable storage media (devices). Computer-readable media that carry computer-executable instructions are transmission media. Thus, by way of example, implementations of the disclosure can include at least two distinctly different kinds of computer-readable media: non-transitory computer-readable storage media (devices) and transmission media.

As used herein, computer-readable storage media (devices) may include RAM, ROM, EEPROM, CD-ROM, solid-state drives (SSDs) (e.g., based on RAM), Flash memory, phase-change memory (PCM), other types of memory, other optical disk storage, magnetic disk storage or other magnetic storage devices, or any other medium that can be used to store desired program code means in the form of computer-executable instructions or data structures and that can be accessed by a general-purpose or special-purpose computer.

The steps and/or actions of the methods described herein may be interchanged with one another without departing from the scope of the claims. In other words, unless a specific order of steps or actions is required for the proper operation of the method being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a data repository, or another data structure), ascertaining, and the like. Also, "determining" can include receiving (e.g., receiving information), accessing (e.g., accessing data in a memory), and the like. Also, "determining" can include resolving, selecting, choosing, establishing, and the like.

The terms "comprising," "including," and "having" are intended to be inclusive and mean that there may be additional elements other than the listed elements. Additionally, it should be understood that references to "one implementation" or "implementations" of the present disclosure are not intended to be interpreted as excluding the existence of additional implementations that also incorporate the recited features. For example, any element or feature described concerning an implementation herein may be combinable with any element or feature of any other implementation described herein, where compatible.

The present disclosure may be embodied in other specific forms without departing from its spirit or characteristics. The described implementations are to be considered illustrative and not restrictive. The scope of the disclosure is indicated by the appended claims rather than by the foregoing description.

Alternatively or in addition to the other examples described herein, examples include any combination of the following clauses:
Clause A. A computer-implemented method for determining response diversity in one or more generative artificial intelligence "AI" models that receive one or more anomalous metrics as input, the computer-implemented method comprising: identifying a set of generative text responses from a generative AI model in response to providing the generative AI model with sets of anomalous metrics, wherein a first generative text response from the set of generative text responses corresponds to a first set of anomalous metrics from the sets of anomalous metrics provided to the generative AI model; generating a graph with a set of nodes based on the set of generative text responses, wherein a first node in the graph corresponds to the first generative text response and is associated with the first set of anomalous metrics; determining a first group diversity score for a first connected node group that includes the first node based on anomalous metrics associated with nodes within the first connected node group including the first set of anomalous metrics; determining a model diversity score for the generative AI model based on combining multiple group diversity scores including the first group diversity score; and providing a model diversity indication for the generative AI model based on the model diversity score.
Clause B. The computer-implemented method of clause A, further comprising filtering the first generative text response using one or more text filtering tools to remove input-based terms before generating the first node from the first generative text response.
Clause C. The computer-implemented method of clause A or clause B, further comprising: generating a first embedding of the first generative text response from a filtered version of the first generative text response using the generative AI model, wherein the generative AI model generates both the first generative text response and the first embedding; and generating additional embeddings from additional generative text responses from the set of generative text responses using the generative AI model.
Clause D. The computer-implemented method of clause C, further comprising: determining cosine similarity values between the first embedding and additional embeddings; and generating a cosine similarity data structure that includes the cosine similarity values.
Clause E. The computer-implemented method of clause D, further comprising generating the graph with the set of nodes by: comparing each of the cosine similarity values for each embedding pair in the cosine similarity data structure to a correspondence threshold; generating a node in the graph for each generative text response in the set of generative text responses, wherein each node in the graph corresponds to an embedding within the cosine similarity data structure; and adding a connection in the graph between each node pair associated with an embedding pair that meets the correspondence threshold.
Clause F. The computer-implemented method of clause E, wherein the correspondence threshold is met when the embedding pair between two nodes in the cosine similarity data structure is at or above 0.95.
Clause G. The computer-implemented method of any preceding clause, further comprising generating the first connected node group by: identifying the nodes in the graph that directly or indirectly connect to the first node via node connections; and creating the first connected node group by forming the nodes into the first connected node group.
Clause H. The computer-implemented method of any preceding clause, further comprising generating the first group diversity score by: identifying a first anomalous metric associated with the first node in the first connected node group; determining a first anomalous metric count based on a number of nodes in the first connected node group that includes the first anomalous metric; and comparing the first anomalous metric count with a total number of nodes in the first connected node group to generate a first diversity score for the first anomalous metric.
Clause I. The computer-implemented method of clause H, further comprising generating the first group diversity score by: determining a first set of anomalous metric scores for each anomalous metric associated with the nodes in the first connected node group; and generating the first group diversity score by combining the first set of anomalous metric scores.
Clause J. The computer-implemented method of any preceding clause, further comprising: generating the multiple group diversity scores by determining group diversity scores for each connected node group in the graph; and generating the model diversity score by averaging the multiple group diversity scores.
Clause K. The computer-implemented method of any preceding clause, further comprising determining the model diversity indication for a set of model diversity indications based on the model diversity score, wherein the set of model diversity indications includes a weakly diverse model indication, a highly diverse model indication, and an over-diverse model indication.
Clause L. The computer-implemented method of clause K, wherein the over-diverse model indication indicates that the generative AI model provides a unique generative text response for each combination of anomalous metric inputs.
Clause M. The computer-implemented method of clause K or clause L, wherein the weakly diverse model indication indicates that the generative AI model provides a same vague generative text response in response to different combinations of anomalous metric inputs.
Clause N. The computer-implemented method of any preceding clause, further comprising: providing incident report prompts to the generative AI model, where each incident report prompt includes a set of anomalous metrics corresponding to a service incident within a cloud computing system; receiving a generative text response for each incident report from the generative AI model indicating a summary text response, a root cause text response, and a mitigation text response; and associating each generative text response received from the generative AI model with a corresponding set of anomalous metrics from which the generative text response was generated to generate the set of generative text responses.
Clause O. A computer-implemented method for determining response diversity in one or more generative artificial intelligence "AI" models that receive one or more anomalous metrics as input, the computer-implemented method comprising: identifying a set of generative text responses from a generative AI model in response to providing the generative AI model with sets of anomalous metric; generating a graph with a set of nodes based on the set of generative text responses, wherein each node is associated with a set of anomalous metrics that corresponds to a generative text response from which each node was generated; determining a group diversity score for each connected node group in the graph based on the sets of anomalous metrics associated with nodes in each connected node group; determining a model diversity score based on combining group diversity scores from each connected node group; and providing a model diversity indication of the generative AI model based on the model diversity score.
Clause P. The computer-implemented method of clause O, further comprising generating the group diversity score by: identifying anomalous metrics associated with the nodes in each connected node group; determining anomalous metric counts based on numbers of nodes in each connected node group; and comparing the anomalous metric counts with total numbers of nodes in each connected node group to generate diversity scores for the anomalous metrics in each connected node group.
Clause Q. The computer-implemented method of clause P, further comprising generating the group diversity scores by: determining sets of anomalous metric scores for the anomalous metrics associated with the nodes in connected node groups; and generating the group diversity scores by combining the sets of anomalous metric scores.
Clause R. The computer-implemented method of any of clauses O to Q, further comprising generating the model diversity score by: determining the group diversity scores for each connected node group in the graph; and generating the model diversity score by averaging the group diversity scores.
Clause S. The computer-implemented method of any of clauses O to R, wherein: each anomalous metric in the set of anomalous metrics is associated with a metric having a metric name and a set of dimensions; and anomalous metrics are uniquely identified by combining the metric name with the set of dimensions as a metric identifier.
Clause T. A system comprising: a processing system having a processor; and a computer memory including instructions that, when executed by the processing system, cause the system to carry out operations comprising: identifying a set of generative text responses from a generative AI model in response to providing the generative AI model with sets of anomalous metrics, wherein a first generative text response from the set of generative text responses corresponds to a first set of anomalous metrics from the sets of anomalous metrics provided to the generative AI model; generating a graph with a set of nodes based on the set of generative text responses, wherein a first node in the graph corresponds to the first generative text response and is associated with the first set of anomalous metrics; determining a first group diversity score for a first connected node group that includes the first node based on anomalous metrics associated with nodes within the first connected node group including the first set of anomalous metrics; determining a model diversity score for the generative AI model based on combining multiple group diversity scores including the first group diversity score; and providing a model diversity indication for the generative AI model based on the model diversity score.

## Claims

1. A computer-implemented method for determining response diversity in one or more generative artificial intelligence "AI" models that receive one or more anomalous metrics as input, the computer-implemented method comprising:
identifying a set of generative text responses (116) from a generative AI model (110) in response to providing the generative AI model (110) with sets of anomalous metrics (112), wherein a first generative text response from the set of generative text responses (116) corresponds to a first set of anomalous metrics from the sets of anomalous metrics (112) provided to the generative AI model (110);
generating a graph (120) with a set of nodes based on the set of generative text responses (116), wherein a first node in the graph corresponds to the first generative text response and is associated with the first set of anomalous metrics;
determining a first group diversity score (132) for a first connected node group (130) that includes the first node based on anomalous metrics associated with nodes within the first connected node group (130) including the first set of anomalous metrics;
determining a model diversity score (142) for the generative AI model (110) based on combining multiple group diversity scores (140) including the first group diversity score (132); and
providing a model diversity indication for the generative AI model (110) based on the model diversity score (142).

2. The computer-implemented method of claim 1, further comprising filtering the first generative text response using one or more text filtering tools to remove input-based terms before generating the first node from the first generative text response.

3. The computer-implemented method of claim 1 or claim 2, further comprising:
generating a first embedding of the first generative text response from a filtered version of the first generative text response using the generative AI model, wherein the generative AI model generates both the first generative text response and the first embedding; and
generating additional embeddings from additional generative text responses from the set of generative text responses using the generative AI model.

4. The computer-implemented method of claim 3, further comprising:
determining cosine similarity values between the first embedding and additional embeddings; and
generating a cosine similarity data structure that includes the cosine similarity values.

5. The computer-implemented method of claim 4, further comprising generating the graph with the set of nodes by:
comparing each of the cosine similarity values for each embedding pair in the cosine similarity data structure to a correspondence threshold;
generating a node in the graph for each generative text response in the set of generative text responses, wherein each node in the graph corresponds to an embedding within the cosine similarity data structure; and
adding a connection in the graph between each node pair associated with an embedding pair that meets the correspondence threshold.

6. The computer-implemented method of claim 5, wherein the correspondence threshold is met when the embedding pair between two nodes in the cosine similarity data structure is at or above 0.95.

7. The computer-implemented method of any preceding claim, further comprising generating the first connected node group by:
identifying the nodes in the graph that directly or indirectly connect to the first node via node connections; and
creating the first connected node group by forming the nodes into the first connected node group.

8. The computer-implemented method of any preceding claim, further comprising generating the first group diversity score by:
identifying a first anomalous metric associated with the first node in the first connected node group;
determining a first anomalous metric count based on a number of nodes in the first connected node group that includes the first anomalous metric; and
comparing the first anomalous metric count with a total number of nodes in the first connected node group to generate a first diversity score for the first anomalous metric.

9. The computer-implemented method of claim 8, further comprising generating the first group diversity score by:
determining a first set of anomalous metric scores for each anomalous metric associated with the nodes in the first connected node group; and
generating the first group diversity score by combining the first set of anomalous metric scores.

10. The computer-implemented method of any preceding claim, further comprising:
generating the multiple group diversity scores by determining group diversity scores for each connected node group in the graph; and
generating the model diversity score by averaging the multiple group diversity scores.

11. The computer-implemented method of any preceding claim, further comprising determining the model diversity indication for a set of model diversity indications based on the model diversity score, wherein the set of model diversity indications includes a weakly diverse model indication, a highly diverse model indication, and an over-diverse model indication.

12. The computer-implemented method of claim 11, wherein the over-diverse model indication indicates that the generative AI model provides a unique generative text response for each combination of anomalous metric inputs; and wherein the weakly diverse model indication indicates that the generative AI model provides a same vague generative text response in response to different combinations of anomalous metric inputs.

13. The computer-implemented method of any preceding claim, further comprising:
providing incident report prompts to the generative AI model, where each incident report prompt includes a set of anomalous metrics corresponding to a service incident within a cloud computing system;
receiving a generative text response for each incident report from the generative AI model indicating a summary text response, a root cause text response, and a mitigation text response; and
associating each generative text response received from the generative AI model with a corresponding set of anomalous metrics from which the generative text response was generated to generate the set of generative text responses.

14. A computer-implemented method for determining response diversity in one or more generative artificial intelligence "AI" models that receive one or more anomalous metrics as input, the computer-implemented method comprising:
identifying a set of generative text responses (116) from a generative AI model (110) in response to providing the generative AI model (110) with sets of anomalous metrics (112);
generating a graph (120) with a set of nodes based on the set of generative text responses (116), wherein each node is associated with a set of anomalous metrics that corresponds to a generative text response from which each node was generated;
determining a group diversity score (132) for each connected node group (130) in the graph (120) based on the sets of anomalous metrics associated with nodes in each connected node group (130);
determining a model diversity score (142) based on combining group diversity scores from each connected node group (130); and
providing a model diversity indication of the generative AI model (110) based on the model diversity score (142).

15. A system comprising:
a processing system having a processor (701); and
a computer memory (703) including instructions (705) that, when executed by the processing system, cause the system to carry out operations comprising:
identifying a set of generative text responses (116) from a generative AI model (110) in response to providing the generative AI model (110) with sets of anomalous metrics (112), wherein a first generative text response from the set of generative text responses (116) corresponds to a first set of anomalous metrics from the sets of anomalous metrics (112) provided to the generative AI model (110);
generating a graph (120) with a set of nodes based on the set of generative text responses (116), wherein a first node in the graph corresponds to the first generative text response and is associated with the first set of anomalous metrics;
determining a first group diversity score (132) for a first connected node group (130) that includes the first node based on anomalous metrics associated with nodes within the first connected node group (130) including the first set of anomalous metrics;
determining a model diversity score (142) for the generative AI model (110) based on combining multiple group diversity scores (140) including the first group diversity score (132); and
providing a model diversity indication for the generative AI model (110) based on the model diversity score (142).
